# EUROPEAN PATENT SPECIFICATION

(11) **EP 3 225 950 B1**
(45) Date of publication and mention of the grant of the patent: **12.09.2018**
(21) Application number: 16163353.2
(22) Date of filing: 31.03.2016
(51) Int. Cl.: G01B 3/18

(54) **PORTABLE DISPLACEMENT MEASURING INSTRUMENT WITH CONSTANT FORCE MECHANISM**
TRAGBARES VERSCHIEBUNGSMESSINSTRUMENT MIT KONSTANTKRAFTVORRICHTUNG
INSTRUMENT DE MESURE DE DÉPLACEMENT PORTABLE AVEC MÉCANISME À FORCE CONSTANTE

(43) Date of publication of application: 04.10.2017
(73) Proprietor: TESA SA, 1020 Renens (CH)
(72) Inventor: BISELX, Frédéric, 1169 Yens (CH); KARAWA, Stéphane, 1007 Lausanne (CH)
(74) Representative: P&TS SA (AG, Ltd.)

(56) References cited:
- US-A- 2 075 754
- US-A- 2 545 782
- US-A1- 2007 068 027
- US-A1- 2013 276 319
- US-A1- 2014 150 274

## Description

### Field of the invention

The present invention concerns a portable displacement measuring instrument for measuring the dimension of an object with high precision, in particular a hand held micrometer, provided with an improved control of the forces acting on the axially moving spindle.

### Description of related art

Micrometers have been known for measuring the dimension of an object based on an axial displacement of a spindle. US 6247244 describes an electronic micrometer comprising a spindle consisting of a micrometric screw engaged in a threaded sleeve which is integral with the anvil of the micrometer. Rotation of a thimble is transmitted to the spindle which is displaced axially with respect to the anvil. A rotary encoder measures the rotation angle, including the number of full turns, from which the displacement of the spindle is calculated based on the thread pitch.

In order to measure the displacement with optimal accuracy, of the order of one micron, as well as to provide measure repeatability, it is necessary to control carefully the forces acting on the spindle and in particular to assure that the contact force with the object being measured is constant.

The importance of the contact force for measurement accuracy is underlined by a series of patents JP1992034681B2, US6553685, JP4806545B2, which disclose means for reading the contact force at the same time as the dimension measured. However, such means are prone to error to the extent that the user must verify for each measurement that the contact force has the correct value. Deviations of the contact force from the desired value, either accidentally or by inattention, harm the repeatability of the measurement.

Simple means of assuring a constant contact force have been proposed, e.g. in US6247244 wherein the spindle of the micrometer is rotated by a thimble via a transmission mechanism comprising a friction spring and a friction ring. This mechanism provides the spindle to be decoupled from the thimble when the spindle comes in contact with the piece to be measured in such a way to ensure a nearly constant measuring pressure and provide high measurement accuracy.

US8413348, US6260286 and EP2131140 disclose a micrometer comprising a moveable spindle that is engaged to rotate by a thimble. The spindle is mechanically connected to the spindle by an axially or radially operating ratchet coupling configured to decouple the spindle from the thimble when the load applied to the spindle is equal or bigger than a predefined threshold. In some embodiments, the constant force mechanism between the thimble and the spindle comprises two ratchet wheels with saw-tooth gear which are pressed together by a spring. If the contact force between the spindle and the object being measured exceeds the force of the spring, then the ratchet gear slips and the thimble rotates freely. In other embodiments, the constant force mechanism between the thimble and the spindle comprises a single ratchet ring with saw-tooth on its inner circumference and a coaxial rotatory element having a leaf spring or swiveling elements that operates radially on the saw-tooth surface in order to provide a rotational coupling with a force control. However, the threshold force defined by the constant force mechanism limits the use of these micrometers uniquely to a limited subgroup of workpieces, i.e. workpieces measurable with contact forces that are compatible with the defined threshold.
US2007/068027 discloses a micrometer with a manually operating roller biased against a movable slider through a constant-force biasing mechanism. US2075754 discloses a micrometer having an adjustable spring ratchet.
US2545782 discloses a micrometer comprising a ratchet mechanism with a spring whose compression force is variable.
US2013/276319 discloses a micrometer with a constant pressure mechanism.
US2014/150274 discloses an electronic caliper with a power generating arrangement with a force-limiting clutch having a screw-mounted preload spring.

### Brief summary of the invention

The aim of the invention is to provide a portable displacement measuring instrument, notably a micrometer, providing a better measurement accuracy and repeatability for larger typologies of workpieces to be measured, with respect to the micrometers of the prior art.

According to the invention, these aims are achieved by means of the displacement measuring instrument of claim 1. Preferred embodiments are subject of the dependent claims.

This solution provides in particular a setting, e.g. an adjustment, of the threshold force of the constant force mechanism to a desired level without requiring additional parts or components substitution, while ensuring that the preset force is not prone to accidental changes during the manipulation of the instrument by the user.

This mechanism further assures a uniform force setting during the assembly of the instrument at the factory, independently of the manufacturing and assembly tolerances of the mechanical parts of the constant force mechanism that could influence this threshold force. This solution further allows a post-factory adjustment of the threshold force, in particular during planned maintenance or inspection of the instrument to assure a correct setting of the threshold force.

The adjustment of the threshold force allows a wider typology of workpieces to be measured accurately and repeatability, e.g. harder or softer workpieces.

According to the invention, the transmission mechanism comprises a rotary-mounted drive sleeve. The drive sleeve is axially stationary with respect to the body of the instrument along the measuring axis. The drive sleeve surrounds a portion of the spindle and is configured for being engaged in rotation by the thimble through the constant force mechanism and for operating on said portion of the spindle in such a way to provide a rotational coupling with the spindle, in particular through a pin and groove mechanism.

This solution provides a more compact and precise instrument. The instrument provides an easy manipulation of the thimble that is axially stationary with respect to the body permitting one-hand manipulation independently from axial displacement of the spindle. The drive sleeve also prevents twisting forces and radial forces acting on the thimble to be propagated to the spindle, avoiding thus variations in the measurement force which affect negatively the accuracy and the repeatability of the measurement.

In a particularly advantageous embodiment, the constant force mechanism comprises an elastic element, such as a spring, a spring assembly or an elastomer. The adjusting mechanism is arranged to operate on such an elastic element for adjusting and/or modifying the threshold value of the constant force mechanism, in particular by adjusting a preload of the elastic element. The adjusting mechanism can comprise a stop or a nut that can advantageously be mounted on the thimble and/or the drive sleeve, wherein the stop/nut operates on an extremity of the elastic element is such a way to adjust and/or modify the preload of the elastic element.

This solution provides a simple mechanism for adjusting the threshold force of the constant force mechanism to a desired value without requiring additional parts or component substitution. Moreover, this solution provides for a setting of the threshold force in a continuous manner, i.e. a stepless adjusting within a given range

In a particular embodiment, the stop is at least partially surrounded by the body or the thimble of the instrument to provide a protection of the adjusting mechanism from accidental changes during the manipulation of the instrument.

In one embodiment, the elastic element is rotationally pressed between a surface coupled with the thimble and a surface coupled with the drive sleeve (or with the spindle) to generate a friction force between said surfaces in such a way to provide a releasable rotational coupling between said surfaces.

Alternatively, the constant force mechanism can comprise a ratchet having a first ratchet wheel rotationally coupled with the thimble and having protrusions and/or recess, and a second ratchet wheel coupled with the drive sleeve (or with the spindle) and having protrusions and/or recess. One of the first and the second ratchet wheel is movable with respect to the other along their common rotational axis. The elastic element can provide an urging force for engaging the protrusions and/or recess of moveable ratchet wheel with the protrusions and/or recess of the other ratchet wheel, such that the first ratchet wheel drives the second ratchet wheel when the load is lower than the threshold, and the first ratchet wheel disengages from the second ratchet wheel when the load is equal or above the threshold. The stop can be a threaded nut screwed on a threaded portion of the drive sleeve in such a way as to modify the preload of the elastic element.

Alternatively, the constant force mechanism can comprise a ratchet having a ratchet wheel coupled with one between the thimble and the spindle (or, alternatively, the drive sleeve) and having protrusions and/or recess, and a component coupled with the other between the thimble and the spindle (or, alternatively, the drive sleeve) and having a protrusion or recess arranged to radially operate with the protrusions and/or recess of the ratchet wheel. The elastic element can provide an urging force for engaging said protrusions and/or recess of said component with the protrusions and/or recess of the protrusions and/or recess of the ratchet wheel, such that the component drives (or is driven by) the ratchet wheel when the load is lower than the threshold, and the component disengages (or is disengaged) from the ratchet wheel when the load is equal or above the threshold.

Advantageously, the constant force mechanism is unidirectional, the load transmitted by the thimble when the spindle moves towards the anvil being limited by the constant force mechanism, and the load transmitted when the spindle moves away from the anvil not being limited by the constant force mechanism. Independently of the load applied on the spindle, the user can rotate the thimble so as to translate the spindle away from the workpiece without a noticeable loss of performance.

Moreover, these solutions provides a constant force mechanism generating a particular sound, i.e. "a click", when the thimble is rotating freely. This warning sound can support the users manipulating the instruments.

Another aim of the present invention is to provide a micrometer where the contact force is transmitted reliably to the constant force mechanism, reducing the contributions from friction and other extraneous forces to a minimum.

In one embodiment, the instrument comprises a ball bearing operationally located between the body and drive sleeve for providing a relative rotation between the drive sleeve and the body.

The ball bearing provides both alignment of the drive sleeve with the micrometer body and smooth rotation of the drive sleeve.

In one embodiment, the encoder is an angular encoder arranged for being driven in rotation by the drive sleeve.

Unlike micrometers where the rotor is driven directly by the spindle, this solution frees the spindle from frictional and other extraneous forces arising from the rotor.

In one embodiment, the angular encoder comprises a rotor disk rotationally coupled with the drive sleeve, a stator disk fixed to the body and an elastic element arranged for pressing one disk against the other.

This solution ensures a better parallelism of the rotary encoder disks and reduces the error in the angle determination.

Moreover, as the drive sleeve engages the rotor of the encoder with a flexible mechanism, the friction arising from a misalignment is further reduced.

Preferably, the pitch of the micrometric screw is comprised between 1 and 3 mm. In one embodiment, the screwing portion of the spindle has a 1.75 mm pitch.

This solution provides a rapid spindle advancement pro thimble turn.

The drive sleeve can be realized with any suitable material, for example in steel, and has preferably a low-friction surface treatment. In one embodiment, the drive sleeve is made of aluminum, or of an advanced polymer, like Kevlar ®, Delrin® or the like, or of a composite.

This solution provides a more resistant sleeve while providing rotational movements with low friction.

### Brief Description of the Drawings

The invention will be better understood with the aid of the description of an embodiment given by way of example and illustrated by the figures, in which:
Figure 1 shows a view of a micrometer according to the invention;
Figure 2 and 3 show an exploded view and a perspective view of the micrometer of Figure 1;
Figure 4 shows a second embodiment of the constant force mechanism of the micrometer, according to the invention;
Figure 5 shows a third embodiment of the constant force mechanism of the micrometer, according to the invention.

### Detailed Description of possible embodiments of the Invention

This invention concerns a portable displacement measuring instrument for measuring the dimension of an object with high precision, in particular a portable, hand held micrometer.

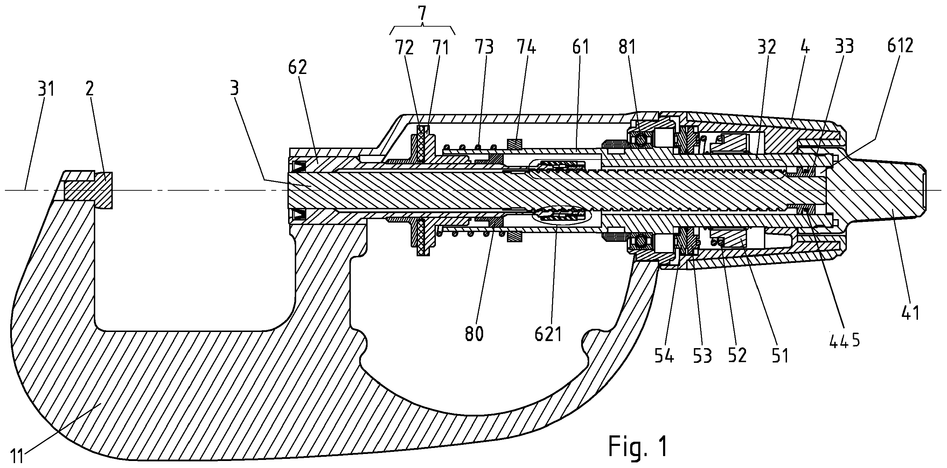

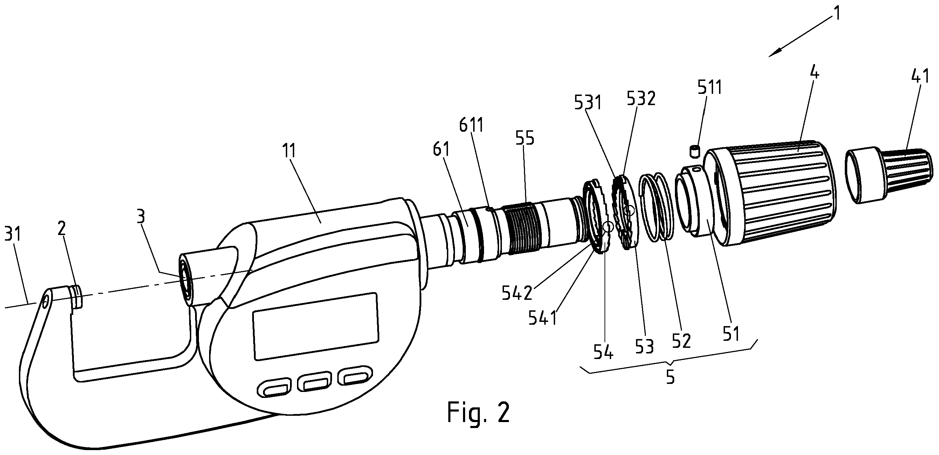

Figures 1-3 show a first embodiment of a micrometer 1 according to the invention.

The micrometer 1 comprises a body 11, an anvil 2, a spindle 3 moveable with respect to the body 11 along a measuring axis 31 towards the anvil, an encoder 7 detecting an axial displacement of the spindle along the measurement axis in such a way to provide a measurement value and a rotationally-mounted thimble 4 being actionable by a user for bringing the operational extremity of the spindle into contact with a workpiece located between the spindle and the anvil.

The micrometer comprises a transmission mechanism being provided between the thimble and the spindle and arranged to convert a rotation of the thimble in a first rotation direction to a translation of the spindle towards the anvil. The transmission mechanism is further arranged to convert a rotation of the thimble in the opposite rotation direction (with respect to the first rotation) to a translation of the spindle away from the anvil.

The transmission mechanism includes a constant force mechanism 5 configured for disengaging the transmission mechanism when a movement of the spindle towards the anvil is opposed by a load surpassing a threshold value, e.g. when the spindle reaches the end of the course or becomes in contact with the piece to be measured.

The constant force mechanism 5 comprises an adjusting mechanism 51, 511, 52, 55 arranged for adjusting the threshold load within a predefined range.

The adjusting mechanism 51, 511, 52, 55 provides an adjustment of the threshold force of the constant force mechanism to a desired value without requiring additional parts or substitution of components. Moreover, a constant contact force is assured during measurements without the need to read or record the contact force. The measuring operations are less prone to error as a result, in addition to being simpler to perform..

The adjustment can be realized during the assembly in factory, or during post-factory handling, e.g. maintenance or inspection, to assure a correct setting of the threshold force that is independent from manufacturing or assembly tolerances as well as the aging of components that are part of the constant force mechanism. The adjusting mechanism ensures a nearly constant measuring pressure all along the operational life of the micrometer, providing thus a high measurement accuracy and repeatability.

Advantageously, the micrometer can be arranged to limit or prevent an operational accessibility to the adjusting mechanism by the user, e.g. by locating the adjusting mechanism, completely or partially, within the micrometer body or the thimble. This ensures that the setting of the threshold force is not changed accidentally during the manipulation of the instrument by the user.

The spindle 3 comprises a threaded external portion 32 operationally engaged in a threaded portion 621 of a sleeve 62 that is statically fixed to the body of the micrometer, i.e. statically fixed with respect to the anvil. Any rotational movement transmitted to the spindle will thus generate a screw motion of the spindle along the measurement axis 31. The direction of the movement will determine the direction of the screw motion, i.e. towards or away from the anvil 2.

The screw pitch of the threaded portion 32 of the spindle (and of the threaded portion 621 of the sleeve 62 respectively) determines the translation step of the spindle towards or away from the anvil per spindle turn.

The micrometer comprises a cylindrical drive sleeve 61 that is operationally located between the spindle 3 and the thimble 4. The drive sleeve is rotatably-mounted with respect to the body and is arranged to be engaged in rotation by the thimble through the constant force mechanism. Both the thimble and the drive sleeve are axially stationary while the spindle can both rotate and translate.

The drive sleeve is further arranged to provide a rotational coupling with the spindle. The drive sleeve is axially stationary with respect to the body, along the measuring axis 31 of the spindle, and it surrounds a portion of the spindle. The drive sleeve provides a transmission of a rotational movement to the spindle through an axially extending groove 612 cooperating with a pin 33 extending from the spindle. This pin-and-groove mechanism provides a rotational coupling between the drive sleeve and the spindle while permitting the spindle to translate itself within the drive sleeve. Preferably, the pin-groove coupling includes an elastic element, like for example the spring 445, to neutralize play.

An axially stationary thimble results in a micrometer that is easy to manipulate, notably permitting one-handed operation independently from the distance the spindle has to travel for contacting the workpiece.

The micrometer that results is thus more precise. The drive sleeve prevents twisting forces and radial forces acting on the thimble to be propagated to the spindle, improving the accuracy and the repeatability of the measurement.

The transmission mechanism of the micrometer of figures 1 to 3 provides a 1:1 rotational coupling between the thimble and the spindle, i.e. one complete turn of the thimble generates one complete turn of the spindle via one complete turn of the drive sleeve, when the transmission mechanism is not disengaged by the constant force mechanism.

In one embodiment, the threaded portion 32 of the spindle has a 1.75mm pitch. This solution provides a rapid spindle advance per spindle turn, i.e. per thimble turn.

The transmission mechanism could be arranged to modify the rotational transmission ratio between the thimble and the spindle.

The constant force mechanism can be realized by a radially or axially operating ratchet or by a friction spring-ring mechanism.

The embodiment illustrated in Figures 1-3 comprises a ratchet 51-54 operating substantially axially with respect to the measurement axis.

A first rotary ratchet wheel 53 is rotationally coupled with the thimble, for example via a pin 532 engaging in a groove of the thimble.

A second rotary ratchet wheel 54 is coupled with the drive sleeve, e.g. via a pin 542 engaging in a groove of the drive sleeve.

The first and the second ratchet wheels 53, 54 are operationally mounted around the drive sleeve 61, such that the rotation axis of the drive sleeve corresponds to the rotation axis of both ratchet wheels.

The first and the second wheels 53, 54 are provided with serrated protrusions 531, 541 that face each other.

The first ratchet wheel 53 is moveably mounted around the drive sleeve 61 in such a way to get closer to (i.e. come into contact with) the second ratchet wheel 54 by an urging force.

An elastic element, such as a spring 52, provides an urging force pressing the first ratchet wheel against the second ratchet wheel so that the serrated protrusions 531 of the first wheel engage the serrated protrusions 541 of the second wheel. The slopes of the serrations convert the torque applied by the user on the thimble into an axial force that tends to separate the first and second ratchet wheels and is opposed by the urging force of the spring. When the torque exceeds a threshold determined by the protrusion's height, by their slope, and by the spring's elastic constant, the ratchet wheels will slip and the thimble will rotate freely so that the force of the spindle's tip against the workpiece under measurement is limited to the threshold value.

The elastic element can be a spring, such as a coil or helical spring or a flat spring. The elastic element can also be a spring assembly, e.g. a stack of coned-disc springs or Belleville washers, or an elastomer.

The slopes of the protrusions 531, 541 can advantageously be asymmetric.

The slopes of the protrusions responsible to transmit the rotation of the thimble on the first rotation direction for generating a movement of the spindle towards the anvil can have a small slope (e.g. less than 10° with respect to the operational surfaces of the wheel) such that the first ratchet wheel 53 drives the second ratchet wheel 54 when the load is lower than the threshold, and the first ratchet wheel slips against (i.e. disengages from) the second ratchet wheel when the load is equal or above the threshold.

The slope of the protrusions responsible to transmit the rotation of the thimble in the opposite rotation direction for generating a movement of the spindle away from the anvil can have a higher slope preferably around 90°, so that the ratchet can transmit the rotational movement even if the measuring force is equal to or above the threshold load.

The adjusting mechanism 5 is arranged for setting, e.g. adjusting, the preload of the elastic element, e.g. the spring 52, in such a way as to adjust the threshold load within a range. The micrometer can thus be provided with a stop holding the free extremity of the spring and moveable with respect to the ratchet wheels in such a way to provide an adjustment of the preload of the spring in a continuous fashion (i.e. stepless fashion) within a predefined range.

A stop is provided, in the form of a threaded nut 51, holding the free extremity of the spring 52 and screwable on a threaded portion 55 of the drive sleeve 61 in such a way as to modify the preload of the spring, i.e. by varying the operational distance of the spring that extends from the wheel 53 to the nut 51.

The threaded nut 51 is provided with a radially operating set screw 511 for axially fixing the position of the nut. The set screw prevents an accidental change of the preset force.

The adjustment nut 51 is shielded by the thimble to protect it further against accidental manipulations.

The micrometer provides thus a simple mechanism for adjusting the threshold force of the constant force mechanism to a desired force without requiring additional parts or substitution of components. Moreover, this solution allows to set the threshold force in a continuous fashion, i.e. a stepless adjusting, within the range of the spring. As a result, the micrometer allows a post-factory adaptation to a wider range of workpiece types which require a measuring force that is higher or lower than the standard one.

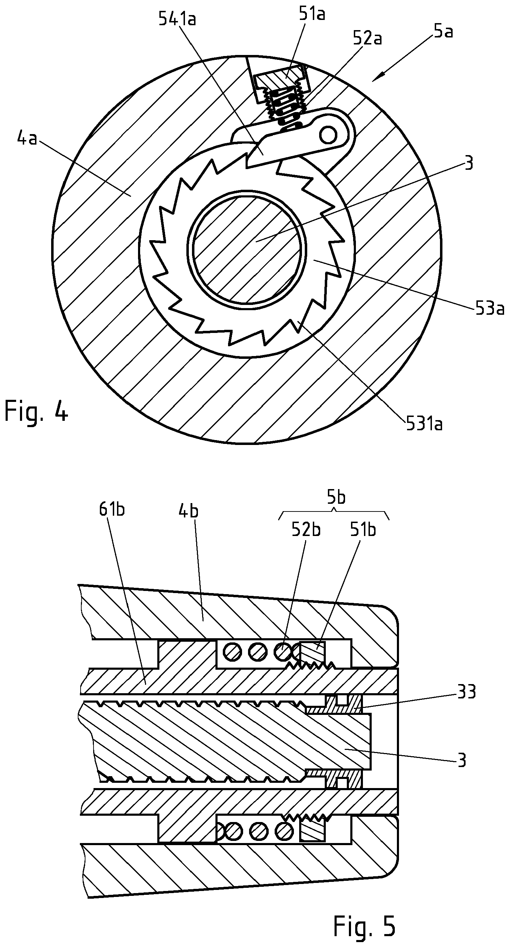

The constant force mechanism 5 can be alternatively realized by a ratchet that is arranged to operate radially (Figure 4), for reducing the amount of space required for the ratchet, in particular the axial length of the ratchet.

The constant force mechanism 5a can thus comprise a ratchet having a single rotary ratchet wheel 53a having protrusions and/or recess 531a, the rotary ratchet wheel being coupled with the thimble 4a or the spindle 3 (e.g. via the drive sleeve). The constant force mechanism can then comprise a rotary-mounted component, such as a leaf spring or a ratchet claw 541a, that is coupled either with the spindle or, respectively, with the thimble. The component can comprise at least a protrusion and/or a recess arranged to operate, preferably radially with respect to rotational axis of the ratchet wheel, with the protrusions and/or recess of the ratchet wheel.

The constant force mechanism can thus comprise an elastic element 52a providing an urging force for engaging the protrusion and/or recess of the component with the protrusions and/or recess of the protrusions and/or recess of the ratchet wheel, such that the component drives the ratchet wheel when the load is lower than the threshold, and the component disengages from the ratchet wheel when the load is equal or above the threshold.

As the previous embodiment of the ratchet, the elastic element 52a can be a spring, a spring assembly or an elastomer.

The micrometer can thus be provided with a stop 51a holding the free extremity of the elastic element for setting, e.g. adjusting, the preload of the elastic element, e.g. by adjusting the relative positioning of the free extremity with respect to the operational extremity of the elastic element.

The relative positioning can be adjusted, e.g. by an adjusting screw 51a arranged to be axially screwed with respect to the operational axis of the elastic element, wherein the head of the screw holds the free extremity of the elastic element.

Alternatively, an adjusting screw arranged to be radially screwed with respect to the operational axis of the elastic element and having a head with an oval lateral surface acting on the free extremity of the elastic element can be used for setting, e.g. adjusting the urging force of the elastic element.

Advantageously, the stop, e.g. the axially or radially adjusting screw 51a, can be relatively positioned with respect to the micrometer in such a way to be shielded by the thimble 4a and/or the body for avoiding any accidental change of the preset force.

Advantageously, the constant force mechanism can be unidirectional, so that the load transmitted when the spindle moves toward the anvil is limited by the constant force mechanism, while the load transmitted when the spindle moves away from the anvil is not limited by the constant force mechanism. Independently of the load applied on the spindle, a rotation of the thimble can thus translate the spindle away from the anvil.

Moreover, these solutions provides a constant force mechanism generating a particular sound, i.e. "a click", when the thimble is rotating freely. These sounds can efficiency support the users manipulating the instruments by warning the user when the threshold force is reached.

The constant force mechanism 5b can be alternatively realized by a friction spring - friction ring mechanism (Figure 5).

An elastic element 52b can be thus pressed between a surface coupled with the thimble 4b and a surface coupled with the drive sleeve 61b (or directly with the spindle) for generating a friction force between said surfaces in such a way to provide a releasable rotational coupling between said surfaces.

As the previous embodiments of the constant force mechanism, the elastic element can be a spring, a spring assembly or an elastomer.

The micrometer can thus be provided with a stop 51b holding the free extremity of the elastic element 52b for setting, e.g. adjusting, the preload of the elastic element, e.g. by adjusting the relative positioning of the free extremity with respect to the operational extremity of the elastic element.

The stop 51b can be in the form of an adjusting nut, for example screwed on the drive sleeve 61b, to hold one of the extremities of the elastic element. Advantageously, the nut can operate as one of the friction surfaces.

The adjustment nut can be located within the micrometer in such a way to be shielded by the thimble or by the body for avoiding any accidental change of the preset force.

This solution provides a simple mechanism for the constant force mechanism.

These embodiments of the constant force mechanism 5, 5a, 5b with the adjusting mechanisms 51, 51a, 51b allow a fine (i.e. continuous) adjustment of the threshold force without replacing the spring. The replacement of the spring is not practical for the assembly and/or quality operator who needs to have a supply of springs on hand for replacement. Moreover, a fine tuning of the threshold force will require a large amount of springs, as well as a lot of time for tuning in order to find the suitable spring to provide the desired threshold force.

Advantageously, the system for adjusting the threshold force is located at a fixed axial position with respect to the body of the instrument and to the thimble, thanks to the drive sleeve that transmits the rotation to the spindle while keeping the thimble at a fixed axial position. This simplifies the choice of a protected position for the adjusting mechanism, notably the adjustment nut or screw, within the body or within the thimble.

The micrometer comprises an encoder, notably an angular encoder 7, arranged for detecting an axial displacement of the spindle along the measurement axis 31 in such a way to provide a measurement value. The encoder can be of capacitive, inductive, magnetic or another type.

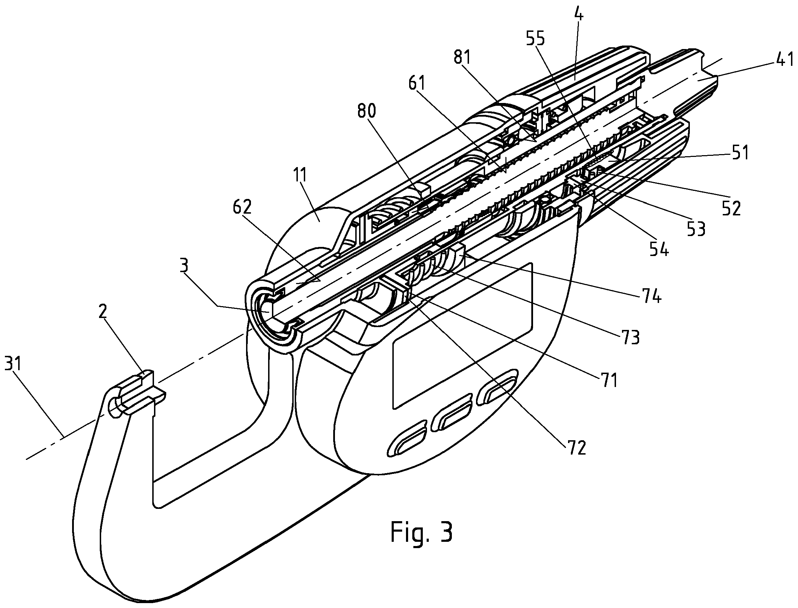

The angular encoder 7 illustrated in the Figures 1 and 3 comprises a stator disk, e.g. a sensor disk 72 that is statically fixed to the body 11.

The angular encoder further comprises a rotor disk, e.g. a scale disk 71, that is rotationally coupled with the drive sleeve 61 and that is axially moveable with respect to the stator disk 72. The rotor disk and the drive sleeve can be rotationally coupled, for example via a pin-groove mechanism (not illustrated).

An elastic element, such as a spring 73, a spring assembly or an elastomer, is arranged for pressing the rotor disk 71 against the stator disk 72. The free extremity of the elastic element 73 is held by a retaining nut 74 fixed on the drive sleeve 61, notably on an external portion of the drive sleeve 61. The retaining nut 74 can be definitively fixed at a predefined distance with respect to the rotor disk 71. Alternatively, the positioning of the retaining nut 74 can be adjusted with respect to the rotor disk 71 in such a way to permit an in-factory or a post-factory adjustment of the preload of the elastic element 73.

The rotor and the stator disks 71, 72 can be separated by a layer, such as a Teflon layer.

The drive sleeve 61 rotates thus the rotor disk, e.g. the scale disk 71, of the rotary encoder that is pressed against the stator disk, e.g. the sensor disk 72 which is fixed to the micrometer body. This arrangement ensures a better parallelism of the rotary encoder disk and improves the encoder accuracy with respect to encoders whose rotor disks are rigidly fixed to the spindle or the drive sleeve, e.g. by gluing.

Moreover, as the drive sleeve engages the rotor disk of the encoder with a flexible mechanism, the friction arising from a misalignment is further reduced.

The micrometer comprises a plain bearing (bushing) 80 and a ball bearing 81 operationally located between the drive sleeve and components fixed to the body which allow the drive sleeve to rotate freely relative to the body.

The bushing 80 is operationally located between the drive sleeve 61 and the fixed threaded sleeve 62, in particular between a portion of the drive sleeve 61 surrounding a portion of the threaded sleeve.

The ball bearing is operationally located between the drive sleeve 61 and a portion of the body 11, providing both alignment of the drive sleeve with the micrometer body and smooth rotation of the drive sleeve.

In order to provide a more resistant drive sleeve 61, which rotates with low friction, the drive sleeve can be made of Aluminum, preferably with low-friction surface treatment.

### List of reference numerals

- 1: Micrometer
- 11: Body
- 2: Anvil
- 3: Spindle
- 31: Measuring axis
- 32: Threaded portion of the spindle
- 33: Pin
- 4,4a, 4b: Thimble
- 41: Fitting
- 445: Spring
- 5, 5a, 5b: Constant force mechanism
- 51, 51a, 51b: Adjustment nut or screw
- 511: Fixing screw
- 52, 52a, 52b: Helical spring
- 53, 53a: 1^{st} ratchet ring
- 531,531a: Serrated protrusions
- 532: Pin
- 54: 2^{nd} ratchet ring
- 541: Serrated protrusions
- 541a: Ratchet claw
- 542: Pin
- 55: Threaded portion of the drive sleeve
- 61, 61b: Drive sleeve
- 611: Groove
- 612: Groove
- 62: Threaded sleeve
- 621: Threaded portion
- 7: Angular encoder
- 71: scale disk - rotor
- 72: sensor disk - stator
- 73: Helical spring
- 74: Retention nut
- 80: Plain bearing
- 81: Ball bearing

## Claims

1. A portable displacement measuring instrument (1), comprising:
a body (11);
an anvil (2);
a spindle (3) moveable with respect to the body (11) along a measuring axis (31) towards the anvil (2);
an encoder (7) detecting an axial displacement of the spindle along the measurement axis in such a way to provide a measurement value;
a rotationally-mounted thimble (4) being actionable by a user for bringing the spindle (3) into contact with a workpiece; and
a transmission mechanism being provided between the thimble (4) and the spindle (3) and arranged to convert a rotation of the thimble in a first rotation direction to a translation of the spindle towards the anvil;
wherein the transmission mechanism comprises a constant force mechanism (5, 5a, 5b) configured for disengaging the transmission mechanism when a movement of the spindle towards the anvil is opposed by a load equal or surpassing a threshold load;
wherein the constant force mechanism (5, 5a, 5b) comprises an adjusting mechanism (51, 511, 52, 55, 51a, 52a, 51b, 52b) arranged for setting the threshold load within a predefined range; and
wherein the transmission mechanism further comprises a rotational-mounted drive sleeve (61) that is axially stationary with respect to the body (11) along the measuring axis (31);
the drive sleeve (61) surrounds a portion of the spindle (3) and is configured for:
being engaged in rotation by the thimble (4) through the constant force mechanism (5, 5a, 5b), and
operating on said portion of the spindle (3) in such a way to provide a rotational coupling with the spindle (3), in particular through a pin and groove mechanism (33,612).

2. The instrument of claim 1, wherein the adjusting mechanism is arranged to operate on an elastic element (52, 52a, 52b) of the constant force mechanism (5).

3. The instrument of claim 2, wherein the elastic element is a spring (52, 52a, 52b), a spring assembly or an elastomer.

4. The instrument of claim 2 or 3, wherein the adjusting mechanism (51, 511, 52, 55, 51a, 52a, 51b, 52b) is configured to modify a preload of said elastic element (52, 52a, 52b), in particular through a stop (51, 51a, 51b) operating on an extremity of said elastic element (52, 52a, 52b) that is moveable with respect to the thimble (4) and/or the drive sleeve (61).

5. The instrument of the claim 4, wherein the stop (51, 51a, 51b) is at least partially surrounded by the body (11) or the thimble (4).

6. The instrument of one of claims 2 to 5, wherein constant force mechanism (5) comprises
a ratchet (51-54) having a first ratchet wheel (53) rotationally coupled with the thimble (4) and having protrusions and/or recess (531), and
a second ratchet wheel (54) coupled with the spindle (3) and having protrusions and/or recess (541); one within the first and the second ratchet wheel being movably with respect to the other; and
wherein said elastic element (52) provides an urging force for engaging the protrusions and/or recess (531) of the moveable ratchet wheel (53) with the protrusions and/or recess (541) of the other ratchet wheel (54), such that the first ratchet wheel drives the second ratchet wheel when the load is lower than the threshold, and the first ratchet wheel disengages from the second ratchet wheel when the load is equal or above the threshold.

7. The instrument of the previous claim, wherein the stop is a threaded nut (51) screwed on a threaded portion (55) of the drive sleeve (61) in such a way to modify the preload of the elastic element (52).

8. The instrument of one of claims 2 to 5, wherein the constant force mechanism (5a) comprises
a ratchet having
a ratchet wheel (53a) coupled with one between the thimble (4a) and the drive sleeve or spindle and having protrusions and/or recess (531a), and
a component (541a) coupled with the other between the thimble and the drive sleeve or spindle and having a protrusion or recess arranged to radially operate with the protrusions and/or recess of the ratchet wheel; and
wherein said elastic element (52a) provides an urging force for engaging said protrusions and/or recess of said component with the protrusions and/or recess of the protrusions and/or recess of the ratchet wheel such that the component drives or is driven by the ratchet wheel when the load is lower than the threshold, and the component disengages or is disengaged from the ratchet wheel when the load is equal or above the threshold.

9. The instrument of any one of the preceding claims, wherein the constant force mechanism is unidirectional, the load transmitted when the spindle approaches the anvil being limited by the constant force mechanism, and the load transmitted when the spindle moves away from the anvil not being limited by the constant force mechanism.

10. The instrument of one of claims 2 to 5, wherein said elastic element (52b) is rotationally pressed between a surface coupled with the thimble (4b) and a surface coupled with the drive sleeve or the spindle for generating a friction force between said surfaces in such a way to provide a releasable rotationally coupling between said surfaces.

11. The instrument of one of claims 1 to 9, when depending on the claim 2, further comprising at least a ball bearing (81) operating between the drive sleeve (61) and the body (11).

12. The instrument of one of claims 1 to 11, wherein the encoder is an angular encoder (7) arranged for being driven in rotation by the drive sleeve (61).

13. The instrument of the previous claim, wherein the angular encoder (7) comprises:
a scale disk (71) rotationally coupled with the drive sleeve (61), and
a sensor disk (72) fixed to the body (11); and wherein an elastic element (73), notably a spring, is arranged for pressing the scale disk (71) against the sensor disk (72).

14. The instrument of one of claims 1 to 13, wherein the drive sleeve (61) is made of Aluminum.

15. The instrument of one of the previous claims, wherein said instrument is a micrometer.

## Patentansprüche

1. Tragbares Verschiebungsmessinstrument (1), aufweisend: einen Körper (11); einen Amboss (2);
eine Spindel (3), welche in Bezug auf den Körper (11) entlang einer Messachse (31) in Richtung auf den Amboss (2) beweglich ist;
einen Messgeber (7), welcher eine axiale Verschiebung der Spindel entlang der Messachse derartig erfasst, um einen Messwert bereitzustellen;
ein drehbar montiertes Fingerhutrohr (4), welches durch eine Bedienperson betätigbar ist, um die Spindel (3) mit einem Werkstück in Kontakt zu bringen; und
einen Übertragungsmechanismus, welcher zwischen dem Fingerhutrohr (4) und der Spindel (3) vorgesehen und dafür eingerichtet ist, um eine Drehung des Fingerhutrohrs in einer ersten Drehrichtung in eine Verlagerung der Spindel in Richtung auf den Amboss zu übertragen; wobei der Übertragungsmechanismus einen Konstantkraftmechanismus (5, 5a, 5b) aufweist, welcher zum Ausrücken des Übertragungsmechanismus ausgelegt ist, wenn einer Bewegung in Richtung auf den Amboss eine Last entgegensteht, welche gleich einer Grenzlast ist oder diese übersteigt;
wobei der Konstantkraftmechanismus (5, 5a, 5b) einen Einstellmechanismus (51, 511, 52, 55, 51a, 52a, 51b, 52b) aufweist, welcher zum Einstellen der Grenzlast innerhalb eines vorgegebenen Bereichs eingerichtet ist; und
wobei der Übertragungsmechanismus ferner eine drehbar montierte Antriebshülse (61) aufweist, welche in Bezug auf den Körper (11) entlang der Messachse (31) axial stationär ist;
die Antriebshülse (61) einen Abschnitt der Spindel (3) umgibt und dafür ausgebildet ist, um:
durch das Fingerhutrohr (4) über den Konstantkraftmechanismus (5, 5a, 5b) in Drehung in Eingriff gebracht zu werden, und
auf dem Abschnitt der Spindel (3) derartig zu agieren, um eine Drehkopplung mit der Spindel (3) bereitzustellen, insbesondere über einen Nut und Feder Mechanismus (33, 612).

2. Instrument nach Anspruch 1, wobei der Einstellmechanismus dafür eingerichtet ist, um auf einem elastischen Element (52, 52a, 52b) des Konstantkraftmechanismus (5) zu agieren.

3. Instrument nach Anspruch 2, wobei das elastische Element eine Feder (52, 52a, 52b), eine Federbaugruppe oder ein Elastomer ist.

4. Instrument nach Anspruch 2 oder 3, wobei der Einstellmechanismus (51, 511, 52, 55, 51a, 52a, 51b, 52b) dafür ausgelegt ist, um eine Vorspannung des elastischen Elements (52, 52a, 52b) zu modifizieren, insbesondere durch einen Anschlag (51, 51a, 51b), welcher auf einem Ende des elastischen Elements (52, 52a, 52b) agiert, welches in Bezug auf das Fingerhutrohr (4) und /oder die Antriebshülse (61) beweglich ist.

5. Instrument nach Anspruch 4, wobei der Anschlag (51, 51a, 51b) zumindest teilweise von dem Körper (11) oder dem Fingerhutrohr (4) umgeben ist.

6. Instrument nach einem der Ansprüche 2 bis 5, wobei der Konstantkraftmechanismus (5) eine Sperrvorrichtung (51-54), welches ein mit dem Fingerhutrohr (4) drehbar gekoppeltes erstes Klinkenrad (53) aufweist und Ausstülpungen und/oder Vertiefung (531) aufweist, und ein zweites Klinkenrad (54) aufweist, welches mit der Spindel (3) gekoppelt ist und Ausstülpungen und/oder Vertiefung (541) aufweist; wobei eines von dem ersten und dem zweiten Klinkenrad in Bezug auf das andere beweglich ist; und
wobei das elastische Element (52) eine drängende Kraft für den Eingriff der Ausstülpungen und/oder Vertiefung (531) des beweglichen Klinkenrads (53) mit den Ausstülpungen und/oder Vertiefung (531) des anderen Klinkenrads (54) bereitstellt, so dass das erste Klinkenrad das zweite Klinkenrad antreibt, wenn die Last kleiner als der Schwellenwert ist, und das erste Klinkenrad von dem zweiten Klinkenrad ausrückt, wenn die Last gleich oder über dem Schwellenwert ist.

7. Instrument nach dem vorhergehenden Anspruch, wobei der Anschlag eine Gewindemutter (51) ist, welche auf einen Gewindeabschnitt (55) der Antriebshülse (61) derartig aufgeschraubt ist, um die Vorspannung des elastischen Elements (52) zu modifizieren.

8. Instrument nach einem der Ansprüche 2 bis 5, wobei der Konstantkraftmechanismus (5a) aufweist eine Sperrvorrichtung, aufweisend
ein Klinkenrad (53a), welches mit einem zwischen dem Fingerhutrohr (4a) und der Antriebshülse oder Spindel gekoppelt ist und Ausstülpungen und/oder Vertiefung (531a) aufweist, und
eine Komponente (541a), welche mit dem anderen zwischen dem Fingerhutrohr und der Antriebshülse oder Spindel gekoppelt ist und eine Ausstülpung und/oder Vertiefung aufweist, welche dafür eingerichtet ist, um radial mit den Ausstülpungen und/oder Aussparung des Klinkenrads zu arbeiten; und
wobei das elastische Element (52a) eine drängende Kraft für den Eingriff der Ausstülpungen und/oder Vertiefung der Komponente mit den Ausstülpungen und/oder Vertiefung des Klinkenrads bereitstellt, so dass die Komponente das zweite Klinkenrad antreibt oder von ihm angetrieben wird, wenn die Last kleiner als der Schwellenwert ist, und die Komponente das zweite Klinkenrad ausrückt oder von ihm ausgerückt wird, wenn die Last gleich oder über dem Schwellenwert ist.

9. Instrument nach einem der vorhergehenden Ansprüche, wobei der Konstantkraftmechanismus unidirektional ist, die Last, welche übertragen wird, wenn sich die Spindel dem Amboss nähert, durch den Konstantkraftmechanismus begrenzt wird, und die Last, welche übertragen wird, wenn sich die Spindel von dem Amboss weg bewegt, nicht durch den Konstantkraftmechanismus begrenzt wird.

10. Instrument nach einem der Ansprüche 2 bis 5, wobei das elastische Element (52b) drehbar zwischen eine mit dem Fingerhutrohr (4b) gekoppelten Oberfläche und eine mit der Antriebshülse oder der Spindel gekoppelten Oberfläche gepresst ist, um eine Reibungskraft zwischen den Oberflächen derartig zu erzeugen, um eine lösbare Drehkopplung zwischen den Oberflächen bereitzustellen.

11. Instrument nach einem der Ansprüche 1 bis 9, wenn von Anspruch 2 abhängig, ferner aufweisend mindestens ein Kugellager (81), welches zwischen der Antriebshülse (61) und dem Körper (11) agiert.

12. Instrument nach einem der Ansprüche 1 bis 11, wobei der Messgeber (7) eingerichtet ist, um durch die Antriebshülse (61) in Drehung angetrieben zu werden.

13. Instrument nach dem vorhergehenden Anspruch, wobei der Winkelmessgeber (7) aufweist:
eine Skalenscheibe (71), welche drehbar mit der Antriebshülse (61) gekoppelt ist, und
eine an dem Körper (11) befestigte Sensorscheibe (72);
und wobei ein elastisches Element (73), insbesondere eine Feder, dafür eingerichtet ist, um die Skalenscheibe (71) gegen die Sensorscheibe (72) zu drücken.

14. Instrument nach einem der Ansprüche 1 bis 13, wobei die Antriebshülse (61) aus Aluminium hergestellt ist.

15. Instrument nach einem der vorhergehenden Ansprüche, wobei das Instrument ist ein Mikrometer ist.

## Revendications

1. Instrument portatif (1) de mesure de déplacement, comprenant :
un corps (11) ;
une touche fixe (2) ;
une touche mobile (3), pouvant se déplacer par rapport au corps (11) vers la touche fixe (2) suivant un axe de mesure (31) ;
un encodeur (7) détectant un déplacement axial de la touche mobile suivant l'axe de mesure de façon à fournir une valeur de mesure ;
un tambour (4) monté rotatif, pouvant être actionné par un utilisateur pour amener la touche mobile (3) en contact avec une pièce de fabrication ; et
un mécanisme de transmission qui est disposé entre le tambour (4) et la touche mobile (3) et agencé pour convertir une rotation du tambour dans un premier sens de rotation en une translation de la touche mobile vers la touche fixe,
dans lequel le mécanisme de transmission comprend un mécanisme à force constante (5, 5a, 5b) configuré pour débrayer le mécanisme de transmission quand un mouvement de la touche mobile vers la touche fixe est combattu par une charge supérieure ou égale à une charge seuil ;
dans lequel le mécanisme à force constante (5, 5a, 5b) comprend un mécanisme de réglage (51, 511, 52, 55, 51a, 52a, 51b, 52b) agencé pour régler la charge seuil dans une plage prédéfinie ; et
dans lequel le mécanisme de transmission comprend en outre un manchon d'entraînement (61) monté en rotation qui est fixe axialement par rapport au corps (11) suivant l'axe de mesure (31) ;
dans lequel le manchon d'entraînement (61) entoure une partie de la touche mobile (3) et est configuré pour :
se solidariser en rotation avec le tambour (4) par l'intermédiaire du mécanisme à force constante (5, 5a, 5b), et
agir sur ladite partie de la touche mobile (3) de façon à fournir un accouplement rotatif avec la touche mobile (3), en particulier par l'intermédiaire d'un mécanisme de tenon et rainure (33, 612).

2. Instrument selon la revendication 1, dans lequel le mécanisme de réglage est agencé pour agir sur un élément élastique (52, 52a, 52b) du mécanisme à force constante (5).

3. Instrument selon la revendication 2, dans lequel l'élément élastique est un ressort (52, 52a, 52b), un ensemble ressort ou un élastomère.

4. Instrument selon la revendication 2 ou 3, dans lequel le mécanisme de réglage (51, 511, 52, 55, 51a, 52a, 51b, 52b) est configuré pour modifier la précharge dudit élément élastique (52, 52a, 52b), en particulier par l'intermédiaire d'une butée (51, 51a, 51b) agissant sur une extrémité dudit élément élastique (52, 52a, 52b) qui est mobile par rapport au tambour (4) et/ou au manchon d'entraînement (61).

5. Instrument selon la revendication 4, dans lequel la butée (51, 51a, 51b) est au moins partiellement entourée par le corps (11) ou le tambour (4).

6. Instrument selon l'une quelconque des revendications 2 à 5, dans lequel le mécanisme de force constante (5) comprend :
un cliquet (51-54) comportant une première roue (53) à rochet accouplée en rotation avec le tambour (4) et comportant des saillies et/ou des évidements (531) ; et
une seconde roue (54) à rochet accouplée en avec la touche mobile (3) et comportant des saillies et/ou des évidements (541) ;
une roue parmi la première et la seconde roue à rochet étant mobile par rapport à l'autre, dans lequel ledit élément élastique (52) fournit une force de poussée pour engrener les saillies et/ou évidements (531) de la roue (53) à rochet mobile avec les saillies et/ou évidements (541) de l'autre roue (54) à rochet, de telle sorte que la première roue à rochet entraîne la seconde roue à rochet quand la charge est inférieure au seuil et la première roue à rochet se désolidarise de la seconde roue à rochet quand la charge est supérieure ou égale au seuil.

7. Instrument selon la revendication précédente, dans lequel la butée est un écrou fileté (51) vissé sur une partie filetée (55) du manchon d'entraînement (61) de façon à modifier la précharge de l'élément élastique (52).

8. Instrument selon l'une quelconque des revendications 2 à 5, dans lequel le mécanisme à force constante (5a) comprend un cliquet comportant :
une roue (53a) à rochet accouplée à une pièce entre le tambour (4a) et le manchon d'entraînement ou la touche mobile, et comportant des saillies et/ou évidements (531a), et
un composant (541a) accouplé à l'autre pièce entre le tambour et le manchon d'entraînement ou la touche mobile, et comportant une saillie ou un évidement agencé pour agir radialement avec les saillies et/ou évidements de la roue à rochet,
dans lequel ledit élément élastique (52a) fournit une force de poussée pour engrener lesdites saillies et/ou évidements dudit composant avec les saillies et/ou évidements de la roue à rochet de telle sorte que le composant entraîne ou est entraîné par la roue à rochet quand la charge est inférieure au seuil et le composant se désolidarise ou est désolidarisé de la roue à rochet quand la charge est supérieure ou égale au seuil.

9. Instrument selon l'une quelconque des revendications précédentes, dans lequel le mécanisme à force constante est unidirectionnel, la charge transmise quand la touche mobile s'approche de la touche fixe étant limitée par le mécanisme à force constante, et la charge transmise quand la touche mobile s'éloigne de la touche fixe n'étant pas limitée par le mécanisme à force constante.

10. Instrument selon l'une quelconque des revendications 2 à 5, dans lequel ledit élément élastique (52b) est serré en rotation entre une surface accouplée à le tambour (4b) et une surface accouplée au manchon d'entraînement ou à la touche mobile pour produire une force de frottement entre lesdites surfaces de façon à fournir un accouplement en rotation débrayable entre lesdites surfaces.

11. Instrument selon l'une quelconque des revendications 1 à 9, quand elle est subordonnée à la revendication 2, comprenant en outre au moins un roulement à billes (81) fonctionnant entre le manchon d'entraînement (61) et le corps (11).

12. Instrument selon l'une quelconque des revendications 1 à 11, dans lequel l'encodeur est un encodeur (7) angulaire agencé pour être entraîné en rotation par le manchon d'entraînement (61).

13. Instrument selon la revendication précédente, dans lequel l'encodeur angulaire (7) comprend :
un disque (71) d'échelle accouplé en rotation au manchon d'entraînement (61), et
un disque (72) de capteur fixé au corps (11),
dans lequel un élément élastique (73), notamment un ressort, est agencé pour serrer le disque (71) d'échelle contre le disque (72) de capteur.

14. Instrument selon l'une quelconque des revendications 1 à 13, dans lequel le manchon d'entraînement (61) est fait d'aluminium.

15. Instrument selon l'une quelconque des revendications précédentes, dans lequel ledit instrument est un micromètre.
